# EUROPEAN PATENT SPECIFICATION

(11) **EP 3 477 819 B1**
(45) Date of publication and mention of the grant of the patent: **24.02.2021**
(21) Application number: 17198445.3
(22) Date of filing: 26.10.2017
(51) Int. Cl.: H02K 1/14, H02K 15/02

(54) **METHOD FOR PRODUCING A STATOR, AND TEETH STACK FOR A STATOR**
VERFAHREN ZUR HERSTELLUNG EINES STATORS UND ZAHNSTAPEL FÜR EINEN STATOR
PROCÉDÉ DE PRODUCTION D'UN STATOR ET PILE DE DENTS DE STATOR

(43) Date of publication of application: 01.05.2019
(73) Proprietor: Robert Bosch GmbH, 70442 Stuttgart (DE)
(72) Inventor: Lisjak, Rado, 1107 Ljubljana Siska (SI); Cernivec, Gregor, 1218 Komenda (SI); Jelenc, Tomaz, 4228 Zelezniki (SI)

(56) References cited:
- EP-A1- 0 849 857
- DE-A1-102007 030 706
- JP-A- H05 292 708
- US-A- 2 607 816

## Description

### Field of the invention

The present invention relates to a method for producing a stator for a synchronous permanent magnet machine. Therefore, the invention particularly relates to electric machines and especially to synchronous permanent magnet machines.

### Background of the Invention

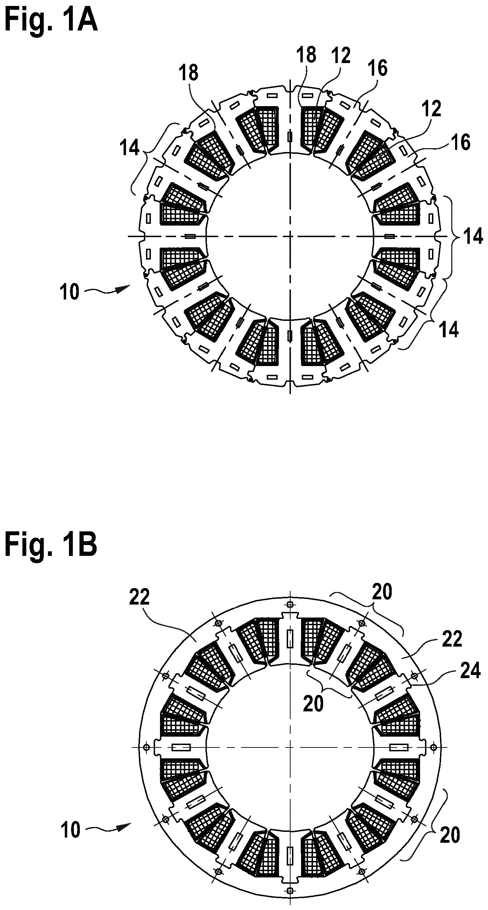

Stators for synchronous permanent magnet machines can be produced in different ways. One possible method is explained with reference to Figure 1A. Figure 1A schematically shows a section of a conventional stator 10, which includes several pre-wound coils 12, which are comprised by packed lamination segments 14 (each segment usually consists of a number of single sheets). The coils are formed by winding a copper wire onto the insulated segment cores 16, where an insulation paper and/or plastic coil carriers 18 are inserted between the windings of copper wire and the segment cores 16. The segment cores 16 may be made of steel or another ferromagnetic material. After the winding process, the yoke sides of the packed lamination segments 14 are sectionally welded together, using for instance a laser welding process, such as to form a round stator 10 out of a plurality of packed lamination segments 14. The welding is necessary in order to keep an essentially round form of the stator 10 during further production steps, such as coil interconnection and housing shrinking processes.

In another possible method, which is explained with reference to Figure 1B, pre-wound segments are provided as packed teeth laminations 20. The packed teeth laminations 20 are inserted into the laminated yoke 22. Particularly, the packed teeth laminations 20 may be pressed in the laminated yoke 22. According to this production method, the stator 10 may have an essentially round or square-like shape. The wires forming the coils may be directly wound onto the laminated teeth or pre-wound coils may be formed and arranged onto the teeth. In any case there needs to be an insulation material between the laminated teeth and the wire of the coils. After the winding or placement of the pre-wound coils, the packed teeth laminations 20 are pressed in the laminated yoke 22 and fixed using dovetail-like wedges 24. Such and similar methods are disclosed in JP H05 292708 A, EP 0 849 857 A1, US 2 607 816 A and DE 10 2007 030706 A1, for example.

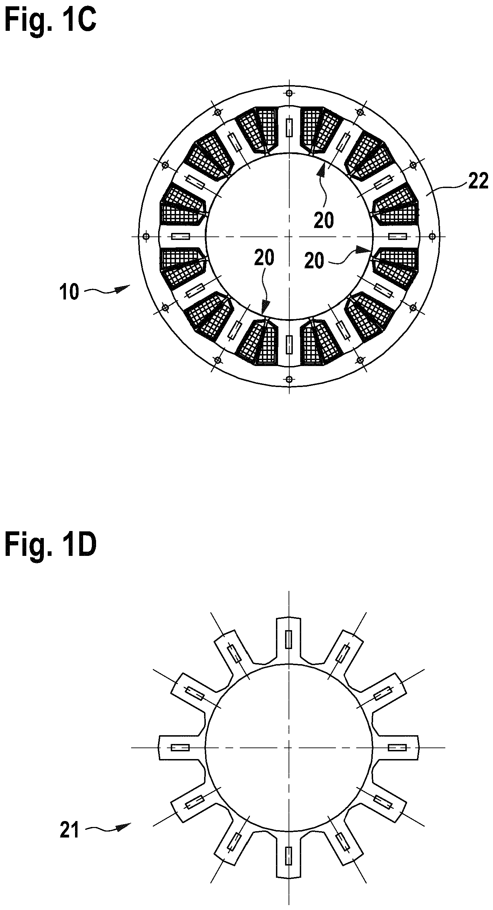

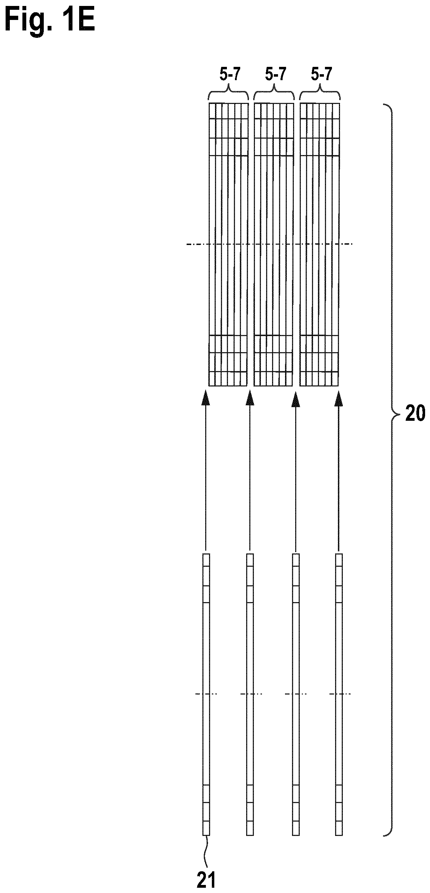

In another possible method, which is shown in Figure 1C, the packed teeth laminations 20 are pressed into the laminated yoke 22. Each of the packed teeth laminations 20 can consist of a number (e.g. 5-7) of sheets alternating with a lamination sheet 21 (Figure 1D), as shown in Figure 1E.

The stator 10 may have a round or a square-like shape. This method provides a stator, in which the packed teeth laminations 20 are connected at their inner ends 26, but no tongue and groove fixation is provided between the teeth and the yoke. This method has the disadvantage that the interconnections between the packed teeth laminations 20 may decrease the flux linkage by partially short-circuiting it, which may lead to losses with respect to the motor characteristics and /or efficiency.

All the above methods suffer from the disadvantage that the production effort and, thus, the production costs for a stator are significantly high. It is thus an object of the invention to provide a facilitated and cheaper method for producing a stator.

### Disclosure of the invention

This problem is solved by a method having the features of the respective independent claim. Preferred embodiments are subject-matters of the dependent claims and the following description.

In one aspect, the invention relates to a method for producing a stator for a synchronous permanent magnet machine. The method comprises a step of providing a teeth stack comprising several teeth, wherein the teeth are arranged in a radial direction forming the teeth stack as a circular structure, wherein the teeth each comprise a root end in a radially outward direction of the teeth stack and an inner end in a radially inward direction of the teeth stack and wherein each two adjacent teeth form a gap in-between and wherein the inner ends of the adjacent teeth are interconnected by means of bridges. Further steps comprise providing at least one coil in at least one of the gaps between adjacent teeth of the teeth stack and arranging the teeth stack within a yoke stack such that the root ends of the teeth are in mechanical contact with the yoke stack, as well as filling a sealing compound at least in the gaps between the teeth such as to form a solid unit from the teeth stack, the at least one coil and the yoke stack. Finally a part of the bridges at the inner end of the teeth is removed such that the teeth stack has a predetermined diameter in the radially inward direction. Preferably, the predetermined diameter, i.e. the predetermined inner diameter, may be adjusted to a rotor to be used within the stator.

A teeth stack usable in connection with the present invention comprises several teeth, wherein the teeth are arranged in a radial direction forming the teeth stack as a circular structure and the teeth each comprise a root end in a radially outward direction of the teeth stack and an inner end in a radially inward direction of the teeth stack. Each two adjacent teeth form a gap in-between and the inner ends of the adjacent teeth are interconnected by means of bridges. The bridges are configured as salient bridges exceeding the inner ends of the teeth in the radially inward direction.

A stator produced according to the present invention comprising such a teeth stack is particularly suitable for use in a synchronous permanent magnet machine.

A tooth or teeth according to the present invention may be a pillar-like structure, which is configured to carry at least one coil, which may be wound around a tooth of the several teeth. The teeth stack comprises several teeth, wherein the teeth stack may be put together by arranging the several teeth accordingly with respect to each other. The teeth stack may comprise a magnetic or magnetisable core material, such as a ferromagnetic material comprising Iron, Nickel and/or Cobalt, and be at least partially electrically insulated with respect to its surrounding. The electrical insulation may be achieved by means of a lamination for obtaining a laminated teeth stack. Laminated means that the laminated teeth stack is at least partially covered by an electrically insulating material, such as to electrically insulate the cores of the respective teeth against their surroundings. The electrically insulating material may be attached to the core of the respective teeth by molding or otherwise attaching it to the core of the teeth.

The teeth stack forming a circular structure means that the several teeth of the teeth stack are arranged such that the teeth stack has a circular shape. Preferably, the teeth are arranged such as to extend in a radial direction with respect to a center of the circular structure, i.e. of the teeth stack. The inner end of the teeth may be facing towards the center of the circular structure, while the root end may be located at the opposite side of the respective tooth with respect to the inner end and may be facing the outer side of the circular structure. The diameter of the stator in the radially inward direction may be referred to as the inner diameter of the stator. The circular structure is not necessarily perfectly circular, but may also have a polygonal shape. For instance, the inner surface of the teeth stack facing the center of the circular structure may have, at least before removing a part of the bridges, a polygonal shape. For instance, the teeth may each have a straight contour at their inner end, and therefore, when arranged adjacently to each other for forming the circular structure of the teeth stack, form a polygonal structure, wherein the side length of said polygonal structure originates in the length of the inner ends of the teeth perpendicular to the radial direction. Also such a polygonal structure may be regarded as a circular structure according to this invention.

The yoke stack may have a round and/or polygonal ring shape with respect to its inner side, such that the laminated teeth stack may be arranged within the yoke stack. Also the yoke stack may have a magnetic and/or magnetisable core and/or may be electrically insulated and/or laminated. According to the invention, the yoke stack is configured such that the teeth stack is in mechanical contact with the yoke stack when inserted in the yoke stack. Preferably, the teeth stack may be mechanically locked with the yoke stack, when arranged in the yoke stack.

The sealing compound may be an electrically insulating compound, which may be applied to fill a possible open volume between the teeth stack and the yoke stack. Especially, the sealing compound may be configured to fill a volume and/or a space between the teeth and/or in particular between the coils provided in the gaps between adjacent teeth. In other words, an empty space and/or volume between adjacent teeth of the teeth stack and/or between the coils arranged around the adjacent teeth may be filled with the sealing compound. That by means of the sealing compound a solid unit is formed from the teeth stack and the at least one coil and the yoke stack means that a mechanically integrated device is formed, which constitutes one mechanical unit, such that its components may not be removed without a prior removal of at least a part the sealing compound within the gaps between adjacent teeth.

The invention provides the advantage that it allows a facilitated and/or faster assembly of a stator as compared to conventional methods. In particular, according to the present invention the stator may be built up of mainly two parts, which is the teeth stack and the yoke stack, and, thus, it is not required to arrange and interconnect a large number of single segments for producing the stator.

In addition, the invention provides the advantage that an outer shape of the stator, which may be defined mainly by the yoke stack, may have an arbitrary shape. In particular, the outer shape of the stator and/or of the yoke stack may be chosen independently and/or may be topologically decoupled from the number of teeth of the teeth stack. This provides a large degree of freedom regarding the outer shape of the stator.

Furthermore, the step of removing a part of the bridges interconnecting the teeth may increase an electromagnetic and/or electro-motive force provided by the stator and/or by an electric machine comprising the stator, as compared to conventional stators. In particular, according to the invention the step of removing the bridges may result in a stator allowing a reduced distance between the coils of the stator and a rotor moving around the center of the stator. Thus, a higher efficiency may be achieved when using a method for producing a stator according to the present invention.

Further, the invention provides the advantage that by the step of removing a part of the bridges a final machining procedure may be carried out enabling a high level of concentricity of the inner and outer stator diameters, which may be beneficially regarding a low harmonic distortion of the magneto-motive force and thus may be advantageous regarding a smooth operation of a respective synchronous permanent magnet machine.

According to the invention, the bridges prior to their partial removal are configured as salient bridges exceeding the inner ends of the teeth in the radially inward direction. This provides the advantage, that the salient bridges may be easily removed partially in a step of machining the inner diameter of the stator. In particular, the salient bridges may be removed partially without any additional effort when machining the inner shape of the stator such as to provide a round and concentric inner shape around the center of the stator.

The method further comprises prior to removing a part of the bridges a step of filling the sealing compound to the inner ends of the teeth, such that the sealing compound exceeds the inner ends of the teeth in the radially inward direction at least by the same amount as the salient bridges. In other words, the sealing compound is provided also at the inner sides of the teeth such as to form a continuous form of the stator incorporating the salient bridges. By this, the machining of the inner diameter of the stator is facilitated and an efficient removal of a part of the bridges may be ensured. Consequently, the step of removing a part of the bridges comprises removing a part of the sealing compound filled to the inner ends of the teeth.

Preferably, the mechanical contact of the root end of the teeth with the yoke stack is fixed by means of a welding connection and/or by means of a tongue and groove connection provided at the root ends of the teeth and at the yoke stack. This provides a stator of sufficient stability, even if adjacent teeth of the teeth stack may not be interconnected at their inner ends by means of bridges. Furthermore, it allows a fast and efficient mechanical fixing beneficial for a fast and cost efficient production of the stator.

Preferably, the at least one coil is provided in at least one of the several gaps between adjacent teeth of the teeth stack by winding the at least one coil in at least one of the gaps and/or by arranging at least one pre-wound coils in at least one of the gaps. In other words, the coils may be wound around a respective tooth and/or may be provided as pre-wound coils and attached afterwards around a respective tooth. This allows a high degree of freedom for producing the stator in an efficient way. Most preferably, at least one coil is provided in each gap between adjacent teeth of the several teeth. Preferably, at least one coil may be provided around each one of the teeth of the teeth stack.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings:
Figures 1A to 1E schematically depict various non-inventive stators and a non-inventive teeth stack.
Figures 2A to 2E schematically depict steps of a production method for a stator according to a first preferred embodiment, while Fig. 2F shows a sketch of an embodiment which does not form part of the invention.
Figures 3A to 3E schematically depict steps of a production method for a stator according to a second preferred embodiment, while Fig. 3F shows a sketch of an embodiment which does not form part of the invention.
Figures 4A to 4E schematically depict steps of a production method for a stator according to a third preferred embodiment, while Fig. 4F shows a sketch of an embodiment which does not form part of the invention.
Figures 5A to 5E schematically depict steps of a production method for a stator according to a fourth preferred embodiment, while Fig. 5F shows a sketch of an embodiment which does not form part of the invention.
Figure 5G schematically depicts serially interconnected coils.

### Detailed description of the drawings

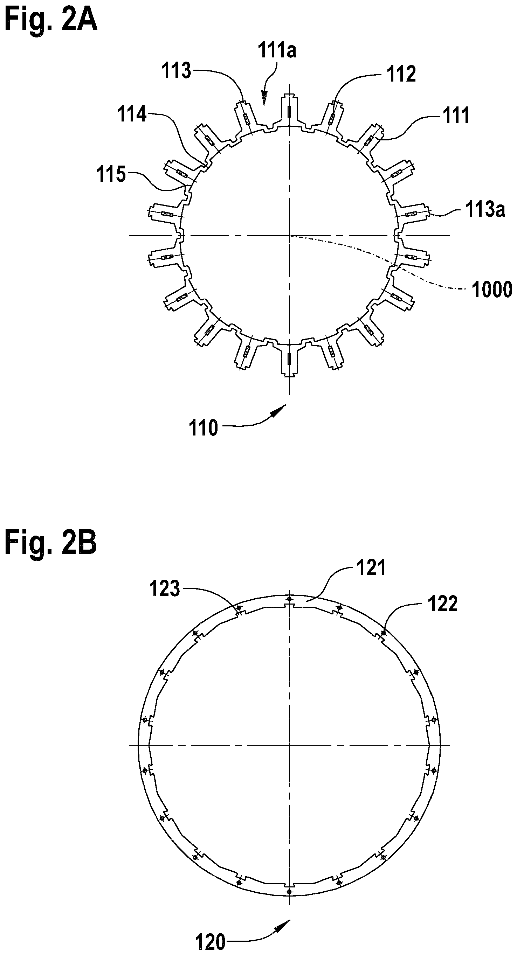

Figures 2A to 2E schematically depict several steps of a production method for a stator 100 according to a first preferred embodiment. As shown in Figure 2A, in a first step a teeth stack 110 is provided, wherein the teeth stack 110 is provided as a laminated teeth stack.

The teeth stack 110 comprises several teeth 111, which are laminated, and which are arranged such that the teeth stack 110 forms a circular structure, wherein the teeth 111 are arranged in radial direction with respect to a center 1000 of the circular structure. The teeth 111 each comprise an interlocking or interlockable element 112 for attaching several teeth stacks 110 together on top of each other.

Furthermore, each tooth 111 comprises a root end 113 and an inner end 115, wherein the root end 113 is arranged in a radially outward direction, i.e. facing away from the center 1000, and wherein the inner end 115 is arranged in a radial inward direction, i.e. facing the center 1000. According to this preferred embodiment, the root end 113 of each tooth 111 comprises a dovetail wedge 113a, which allows connecting the teeth stack with a corresponding yoke stack 120 by means of a tongue and groove connection.

Adjacent teeth 111 of the teeth stack 110 are interconnected at their inner sides 115 by means of bridges 114, wherein the bridges 114 are configured as salient bridges extending the inner sides 113 of the teeth 111 in radially inward direction.

In a second step (Figure 2B), a yoke stack 120 is provided. The yoke stack 120 comprises a yoke frame 121, which also forms a circular structure and has appropriate dimensions to arrange the teeth stack 110 therein. Also the yoke stack 120 comprises interlockable elements 122 for attaching several yoke stacks 120 together on top of each other. Furthermore, the yoke stack 120 comprises several yoke slots 123, which are adapted such as to form a groove and tongue connection with the respective dovetail wedges 113a at the root end 113 of the teeth of the teeth stack 110 when the teeth stack 110 is inserted into the yoke stack 120. The yoke stack 120 is laminated to represent a laminated yoke stack.

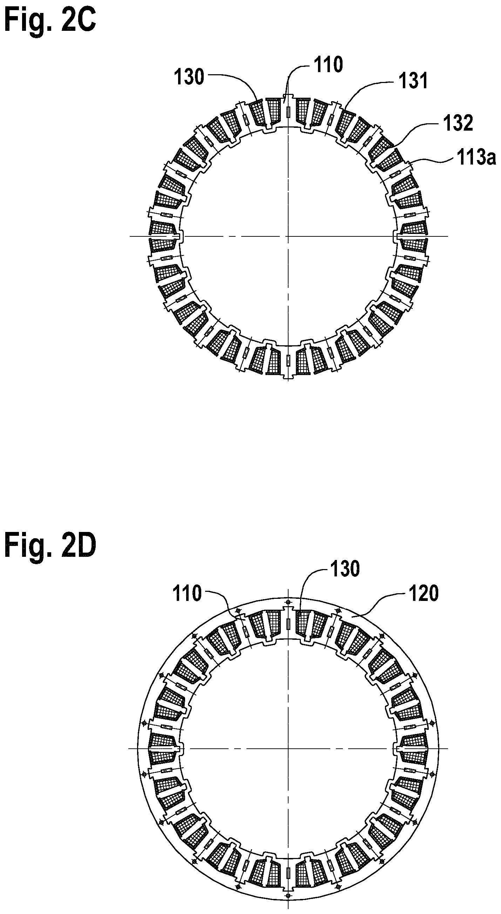

In a third step (Figure 2C) coils 130 are arranged on the teeth stack 110, wherein around each of the teeth 111 a coil 130 is provided. The coils 130 may be made of insulated copper wire 132 and are pre-wound around coil carriers 131, which may be made of an insulating material, such as a plastic or paper material. The coils 130 and the coil carriers 131 are then attached to the teeth 111 of the teeth stack 110 to provide the teeth stack 110 with coils.

In a fourth step (Figure 2D) the teeth stack 110 equipped with the coils 130 is then assembled with the yoke stack 120 by pressing the teeth stack 110 into the yoke stack 120. The teeth stack 110 is mechanically connected and/or fixed to the yoke stack 120 by means of the dovetail wedges 113a engaging with the yoke slots 123 to form a fixed mechanical connection between the yoke stack 120 and the teeth stack 110.

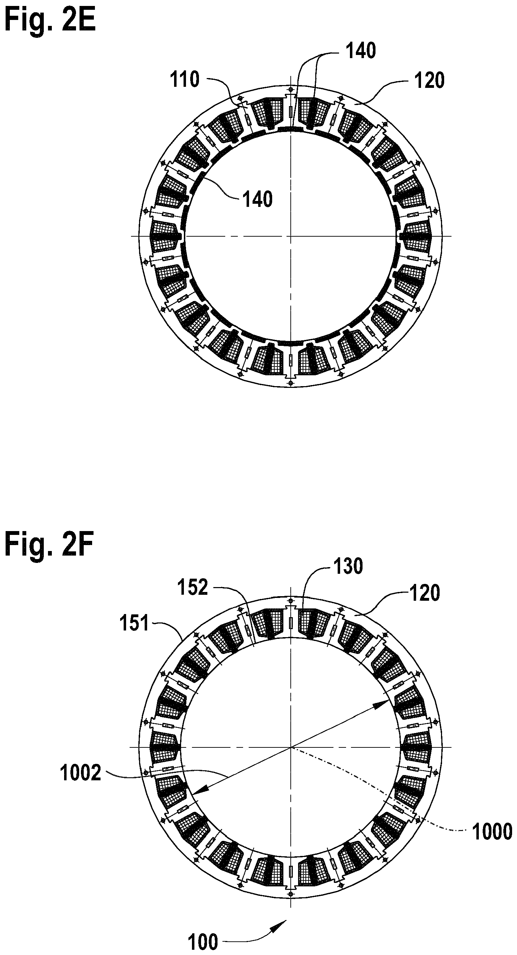

In a fifth step (Figure 2E) the assembly of the teeth stack 110 and the yoke stack 120 is sealed by inserting a sealing compound 140 between the teeth 111 of the teeth stack 110 and/or between the yoke stack 120 and the teeth stack 110. The sealing compound 140 may comprise an epoxy and/or a polyurethane compound and preferably is electrically insulating. Furthermore, a sealing compound 140 is provided at the inner ends 115 of the teeth, such as to form a uniform surface with the salient bridges 114 and/or to cover the bridges 114 in radially inward direction.

In a sixth step (Figure 2F), after curing the sealing compound 140, the inner surface 152 of the stator 100 is machined, especially in a lathe, such that the stator 100 exhibits a finished inner diameter 1002 being equal to a predetermined inner diameter with respect to the center 1000. In the machining process the stator 100 may be fixed on its outer surface 151 and the bridges 140 are machined off, such that adjacent teeth 111 are not interconnected any more by means of the bridges 114 but are interconnected merely by the yoke stack 120 and/or by the sealing compound 140.

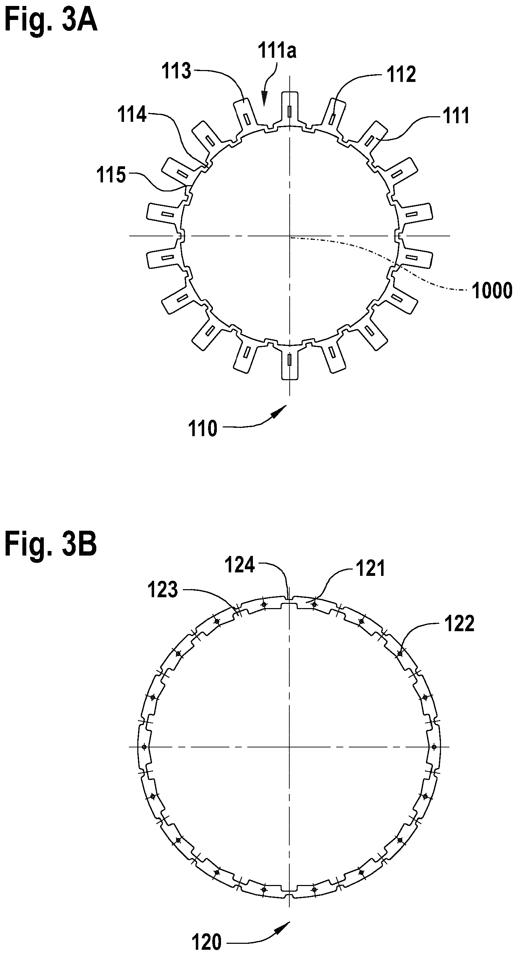

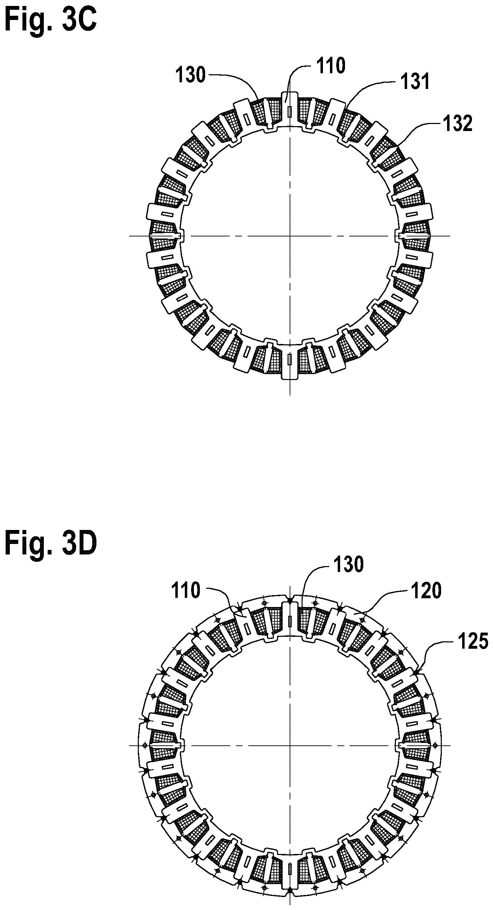

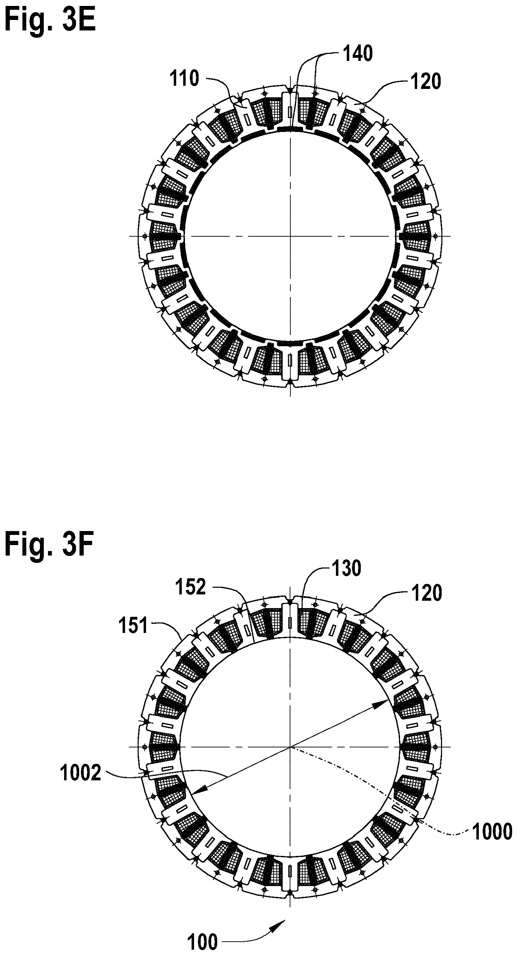

Figures 3A to 3E schematically depict several steps of a production method for a stator 100 according to a second preferred embodiment. In many aspects, the method according to the second preferred embodiments corresponds to the first embodiment, wherein for the sake of conciseness the corresponding elements, which are indicated with the same reference signs as in Figures 2A to 2F, and same method steps are not repeatedly explained.

The stator 100 and the method according to the second embodiment differ from the first embodiment in particular by the fact that the teeth 111 are not provided with dovetail wedges at their root ends 113 and, thus, are not configured to establish a tongue and groove connection with the yoke stack 120. Instead, according to the second embodiment the teeth stack 110 and the yoke stack 120 are attached and/or fixed to each other by means of glueing or welding connections 125 at the root ends 113 of the teeth.

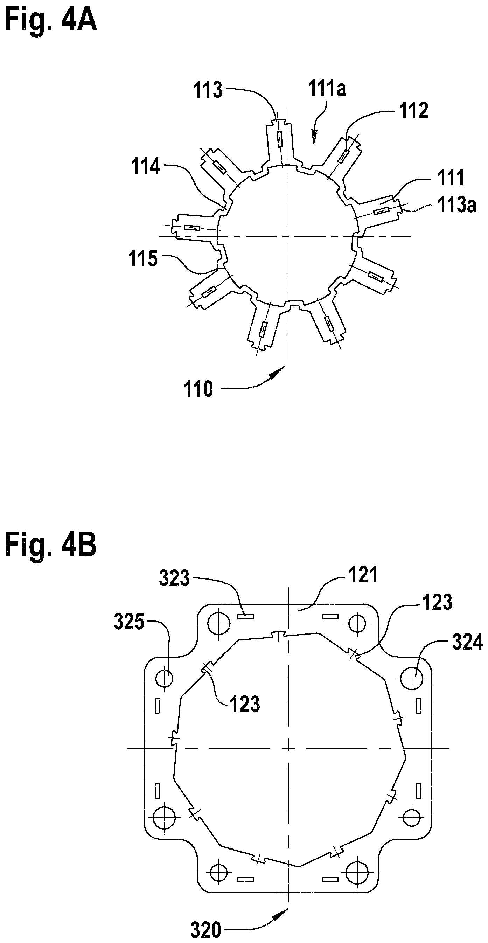

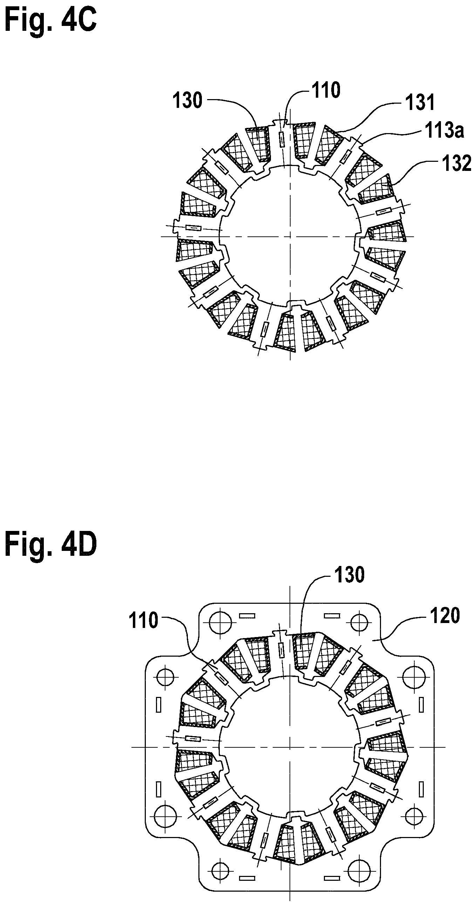

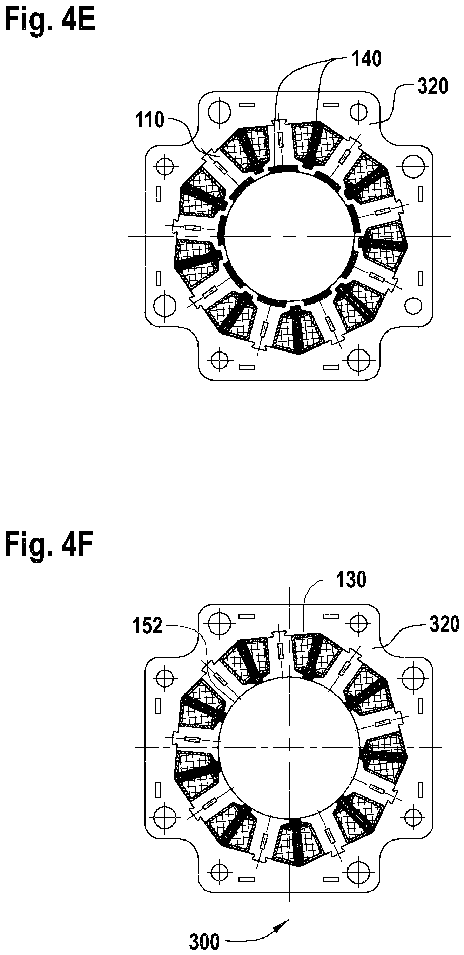

Figures 4A to 4E schematically depict several steps of a production method for a stator 300 according to a third preferred embodiment. This stator 100 and this method differ from the first and second embodiment by a different yoke stack 320. The yoke stack 320 according to the third embodiment has a different outer shape than the yoke stacks 120 of the previous embodiments.

The yoke stack 320 of the third embodiment already defines a housing of the stator 100. This is possible, since according to the invention the shape of the housing and the shape of the yoke stack 120, 320 is not depending on the shape of the teeth stack 110. Thus, the yoke stack 320 and the stator 100, 300 can have an almost arbitrary outer shape.

Further, the yoke stack 320 may comprise an interlocking element 323 and several fixation elements 324 and 325 for attaching several yoke stacks 320 to each other or attaching the yoke stack 320 as a housing of the stator 300 to other elements connected with the stator 300.

According to the third embodiment, the teeth 111 are again equipped with dovetail wedges 113a at the root ends 113 of the teeth 111 to engage with the yoke slots 123. The wire 132 may be pre-wound around a coil carrier 131 or wound directly around the teeth 111 having an insulation paper arranged in-between the wire 132 and the respective tooth 111.

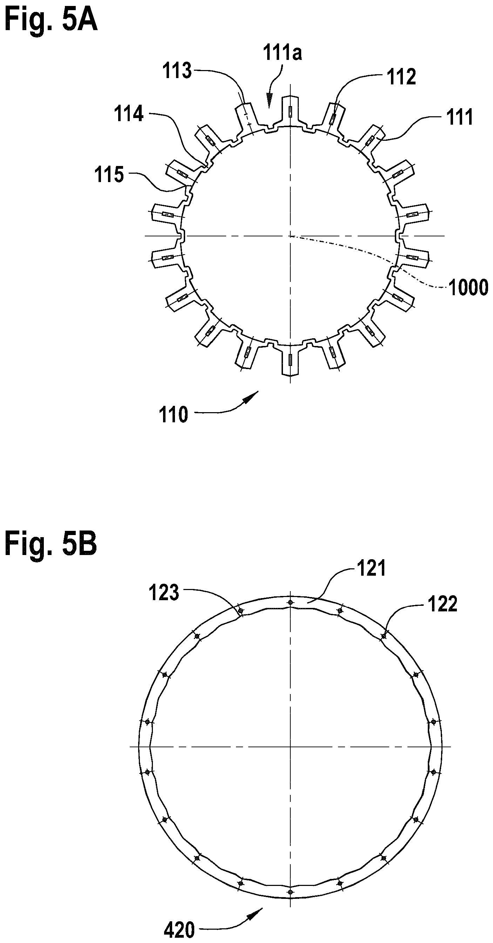

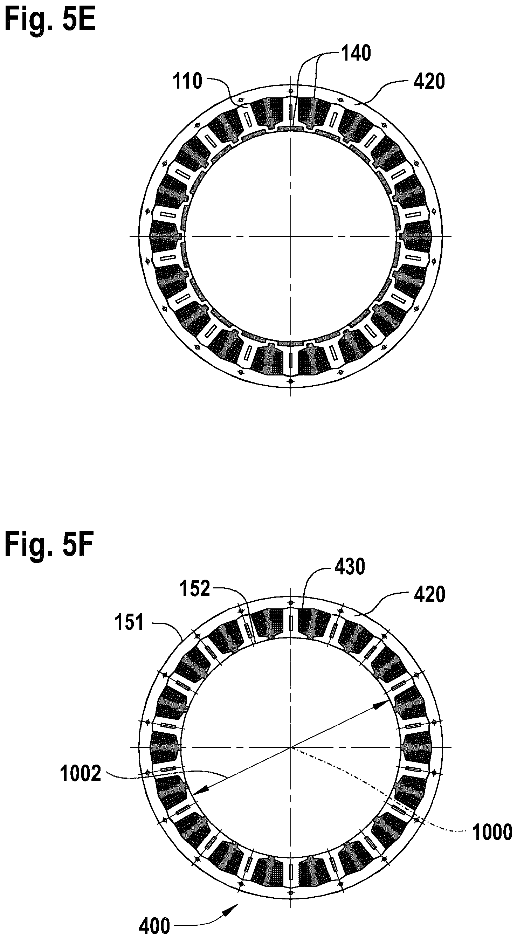

Figures 5A to 5E schematically depict a stator 400 and a method for producing such according to a fourth preferred embodiment. The teeth stack 110 of the fourth embodiment corresponds to the teeth stack 110 of the second embodiment, i.e. it is not provided with dovetail wedges 113a at the root ends 113 of the teeth 111. Also the yoke stack 120 of the fourth embodiment corresponds to the yoke stack 120 of the second embodiment, wherein the inner side of the yoke stack 120 is shaped with an appropriate tolerance to allow a proper press assembly of the teeth tack 110 and the yoke stack 120.

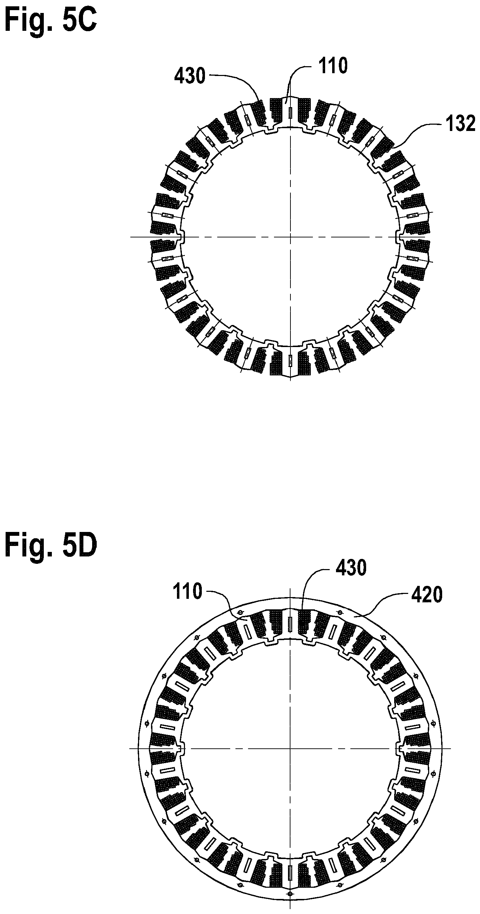

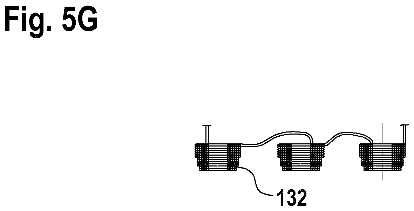

If the teeth stack 110 and the yoke stack 120 are intended for low-voltage applications, i.e. for applications with a voltage of 50 V or less, they are preferably coated or laminated with epoxy impregnation resin and/or with epoxy lacquer using for instance a cataphoresis procedure. For high-voltage applications an insulation paper and/or a thermoplastic and/or duroplastic moulding material may be preferably used for the lamination and/or the electrical insulation. For the coils 130 preferably a wire 132 coated with thermally activated lacquer, also called "backlack", is used, wherein the wire 132 is wound around the respective tooth or around a winding tool and then thermally formed to make a coil 130 and/or serially interconnected coils 430. Serially interconnected coils 430 are schematically shown in Figure 5G. In case the coils 130, 430 are pre-wound, they may be inserted onto the laminated teeth stack 110 and fixed thereto (Figure 5C). The following method steps, such as the assembly of the teeth stack 110 and the yoke stack 420 (Figure 5D), providing the sealing compound (Figure 5E) and machining the inner diameter 152 of the stator 400, correspond to the respective method steps, as explained with reference to Figures 2A to 2F.

### Reference signs

- 10: stator
- 12: pre-wound coils
- 14: packed lamination segments
- 16: segment core
- 18: coil carrier
- 20: packed teeth laminations
- 21: interconnected lamination sheet
- 22: laminated yoke
- 100, 300, 400: stator
- 110: teeth stack
- 111: tooth
- 112: interlocking element
- 113: root end
- 113a: dovetail wedges
- 114: bridge
- 115: inner end
- 120, 320, 420: yoke stack
- 121: yoke frame
- 122: interlockable elements
- 123: yoke slot
- 125: welding connection
- 130: coil
- 131: coil carrier
- 132: wire
- 140: sealing compound
- 151: outer diameter of the stator
- 152: inner diameter of the stator
- 323: interlocking element
- 324, 325: fixation elements
- 430: serially interconnected coils
- 1000: center
- 1002: finished inner diameter of the stator

## Claims

1. Method for producing a stator (100, 300, 400) for a synchronous permanent magnet machine, the method comprising: providing a teeth stack (110) comprising several teeth (111), wherein the teeth (111) are arranged in a radial direction forming the teeth stack (110) as a circular structure, wherein the teeth (111) each comprise a root end (113) in a radially outward direction of the teeth stack (110) and an inner end (115) in a radially inward direction of the teeth stack (110) and wherein each two adjacent teeth (111) form a gap (111a) in-between and wherein the inner ends (115) of the adjacent teeth (111) are interconnected by means of salient bridges (114) exceeding the inner ends (115) of the teeth (111) in the radially inward direction;
- providing at least one coil (130, 430) in at least one of the gaps (111a) between adjacent teeth (111) of the teeth stack (110);
- arranging the teeth stack (110) within a yoke stack (120, 320, 420) such that the root ends (113) of the teeth (111) are in mechanical contact with the yoke stack (120, 320, 420);
- filling a sealing compound (140) at least in the gaps (111a) between the teeth (111) and to the inner ends (115) of the teeth (111) such that the sealing compound (140) exceeds the inner ends (115) of the teeth (111) in the radially inward direction at least by the same amount as the salient bridges (114) such as to form a solid unit from the teeth stack (110), the at least one coil and the yoke stack (120, 320, 420);
- removing a part of the bridges (114) at the inner end (115) of the teeth (111) such that the teeth stack (110) has a predetermined diameter (152) in the radially inward direction, wherein the step of removing a part of the bridges (114) comprises removing a part of the sealing compound (140) filled to the inner ends (115) of the teeth (111).

2. Method according to claim 1, wherein the mechanical contact of the root end (113) of the teeth (111) with the yoke stack (120, 320, 420) is fixed by means of a welding connection (125) and/or by means of a tongue and groove connection provided at the root ends (113) of the teeth (111) and the yoke stack (120, 320, 420).

3. Method according to any one of the preceding claims, wherein the at least one coil (130, 430) is provided in at least one of the several gaps (111a) between adjacent teeth (111) of the teeth (110) stack by winding the at least one coil (130, 430) in at least one of the gaps (111a) and/or by arranging at least one pre-wound coils (130, 430) in at least one of the gaps (111a).

4. Method according to any one of the preceding claims, wherein at least one coil (130, 430) is provided in each gap (111a) between adjacent teeth (111) of the several teeth (111).

## Patentansprüche

1. Verfahren zur Herstellung eines Stators (100, 300, 400) für eine Permanentmagnet-Synchronmaschine, wobei das Verfahren umfasst:
Bereitstellen eines Zahnstapels (110), der mehrere Zähne (111) umfasst, wobei die Zähne (111) in einer Radialrichtung angeordnet sind, wodurch der Zahnstapel (110) als kreisförmige Struktur gebildet wird, wobei die Zähne (111) jeweils ein Wurzelende (113) in einer radialen Auswärtsrichtung des Zahnstapels (110) und ein inneres Ende (115) in einer radialen Einwärtsrichtung des Zahnstapels (110) umfassen, und wobei jeweils zwei benachbarte Zähne (111) eine Lücke (111a) dazwischen bilden, und wobei die inneren Enden (115) der benachbarten Zähne (111) mittels vorspringender Brücken (114) miteinander verbunden sind, welche über die inneren Enden (115) der Zähne (111) in der radialen Einwärtsrichtung hinausgehen;
- Bereitstellen von mindestens einer Spule (130, 430) in mindestens einer der Lücken (111a) zwischen benachbarten Zähnen (111) des Zahnstapels (110);
- Anordnen des Zahnstapels (110) innerhalb eines Jochstapels (120, 320, 420), so dass die Wurzelenden (113) der Zähne (111) in mechanischem Kontakt mit dem Jochstapel (120, 320, 420) sind;
- Füllen einer Siegelverbindung (140) mindestens in die Lücken (111a) zwischen den Zähnen (111) und bis zu den inneren Enden (115) der Zähne (111), so dass die Siegelverbindung (140) in der radialen Einwärtsrichtung über die inneren Enden (115) der Zähne (111) mindestens um den gleichen Betrag wie die vorspringenden Brücken (114) hinausgeht, um so eine feste Einheit aus dem Zahnstapel (110), der mindestens einen Spule und dem Jochstapel (120, 320, 420) zu bilden;
- Entfernen eines Teils der Brücken (114) an dem inneren Ende (115) der Zähne (111), so dass der Zahnstapel (110) einen vorgegebenen Durchmesser (152) in der radialen Einwärtsrichtung aufweist, wobei der Schritt des Entfernens eines Teils der Brücken (114) Entfernen eines Teils der Siegelverbindung (140) umfasst, die bis zu den inneren Enden (115) der Zähne (111) gefüllt ist.

2. Verfahren nach Anspruch 1, wobei der mechanische Kontakt des Wurzelendes (113) der Zähne (111) mit dem Jochstapel (120, 320, 420) mittels einer Schweißverbindung (125) und/oder mittels einer Nut- und Feder-Verbindung fixiert wird, die an den Wurzelenden (113) der Zähne (111) und dem Jochstapel (120, 320, 420) bereitgestellt wird.

3. Verfahren nach einem der vorhergehenden Ansprüche, wobei die mindestens eine Spule (130, 430) in mindestens einer der mehreren Lücken (111a) zwischen benachbarten Zähnen (111) des Zahnstapels (110) bereitgestellt wird, indem die mindestens eine Spule (130, 430) in mindestens eine der Lücken (111a) gewickelt wird und/oder indem mindestens eine vorgewickelte Spule (130, 430) in mindestens einer der Lücken (111a) angeordnet wird.

4. Verfahren nach einem der vorhergehenden Ansprüche, wobei mindestens eine Spule (130, 430) in jeder Lücke (111a) zwischen benachbarten Zähnen (111) der mehreren Zähne (111) bereitgestellt wird.

## Revendications

1. Procédé de production d'un stator (100, 300, 400) pour une machine synchrone à aimants permanents, le procédé comprenant : l'obtention d'un empilement de dents (110) comprenant plusieurs dents (111), les dents (111) étant disposées dans une direction radiale, formant l'empilement de dents (110) comme une structure circulaire, les dents (111) comprenant chacune une extrémité de racine (113) dans une direction radialement vers l'extérieur de l'empilement de dents (110) et une extrémité interne (115) dans une direction radialement vers l'intérieur de l'empilement de dents (110), et toutes les deux dents adjacentes (111) formant un espace (111a) entre elles, et les extrémités internes (115) des dents adjacentes (111) étant interconnectées au moyen de ponts saillants (114) dépassant des extrémités internes (115) des dents (111) dans la direction radialement vers l'intérieur ;
- le positionnement d'au moins une bobine (130, 430) dans au moins un des espaces (111a) entre dents adjacentes (111) de l'empilement de dents (110) ;
- la mise en place de l'empilement de dents (110) à l'intérieur d'un empilement de culasses (120, 320, 420) de telle sorte que les extrémités de racine (113) des dents (111) soient en contact mécanique avec l'empilement de culasses (120, 320, 420) ;
- le versement d'un composé d'étanchéité (140) au moins dans les espaces (111a) entre les dents (111) et jusqu'aux extrémités internes (115) des dents (111) de telle sorte que le composé d'étanchéité (140) dépasse des extrémités internes (115) des dents (111) dans la direction radialement vers l'intérieur au moins de la même quantité que les ponts saillants (114) de manière à former une unité pleine à partir de l'empilement de dents (110), de l'au moins une bobine et de l'empilement de culasses (120, 320, 420) ;
- le retrait d'une partie des ponts (114) à l'extrémité interne (115) des dents (111) de telle sorte que l'empilement de dents (110) ait un diamètre prédéterminé (152) dans la direction radialement vers l'intérieur, l'étape de retrait d'une partie des ponts (114) comprenant le retrait d'une partie du composé d'étanchéité (140) versé jusqu'aux extrémités internes (115) des dents (111).

2. Procédé selon la revendication 1, dans lequel le contact mécanique de l'extrémité de racine (113) des dents (111) avec l'empilement de culasses (120, 320, 420) est fixé au moyen d'un joint soudé (125) et/ou au moyen d'un assemblage à rainure et languette disposés aux extrémités de racine (113) des dents (111) et au niveau de l'empilement de culasses (120, 320, 420).

3. Procédé selon l'une quelconque des revendications précédentes, dans lequel l'au moins une bobine (130, 430) est positionnée dans au moins un de la pluralité d'espaces (111a) entre dents adjacentes (111) de l'empilement de dents (110) par enroulement de l'au moins une bobine (130, 430) dans au moins un des espaces (111a) et/ou par mise en place d'au moins une bobine pré-enroulée (130, 430) dans au moins un des espaces (llla).

4. Procédé selon l'une quelconque des revendications précédentes, dans lequel au moins une bobine (130, 430) est positionnée dans chaque espace (111a) entre dents adjacentes (111) de la pluralité de dents (111).
